# EUROPEAN PATENT APPLICATION

(11) **EP 4 782 232 A1**
(43) Date of publication of application: **29.07.2026**
(21) Application number: 25153599.3
(22) Date of filing: 23.01.2025
(51) Int. Cl.: B60H 1/00, B60H 1/03

(54) **A HEATING, VENTILATION, AND AIR COMDITIONING (HVAC) SYSTEM FOR A VEHICLE**

(71) Applicant: Volvo Car Corporation, 405 31 Göteborg (SE)
(72) Inventor: OLSSON, Peter, 40531 Göteborg (SE); WINTER, Stefan, 40531 Göteborg (SE)
(74) Representative: Kransell & Wennborg KB

(57) **Abstract**

The disclosure relates to a heating, ventilation, and air conditioning (HVAC) system for a vehicle, wherein the system is operable in at least two operation modes and the system comprises: a first heat exchanger (241); a second heat exchanger (242); and an air rejection port (271) arranged between the first and second heat exchanger; wherein: in a first operation mode of the system, the first heat exchanger is used for cooling in the system and the second heat exchanger is used for heating in the system; in a second operation mode of the system, the first heat exchanger is used for heating in the system and the second heat exchanger is used for cooling in the system; and the air rejection port is arranged for rejecting at least a portion of air, transported in the system, to outside environment of the vehicle in any one of the at least two operation modes of the system.

## Description

### TECHNICAL FIELD

The present disclosure relates to a heating, ventilation, and air conditioning (HVAC) system for a vehicle, a vehicle comprising the HVAC system, and a use of the HVAC system.

### BACKGROUND ART

A conventional HVAC system guides either the outside air from outside the vehicle or the cabin air from inside the vehicle through a heat exchanger and/or a bypass bypassing the heat exchanger. The airconditioned air is then fed into the cabin. However, in the conventional system, there is a limited usage of the energy contained in the air circulating through the HVAC system, leading to a low thermal efficiency. Thus, there is room for improvements in the HVAC system for a vehicle.

### SUMMARY

The problem is at least partially solved or alleviated by the subject matter of the independent claims of the present disclosure, wherein further examples are incorporated in the dependent claims.

According to a first aspect, there is provided a heating, ventilation, and air conditioning, HVAC, system for a vehicle, wherein the system is operable in at least two operation modes and the system comprises: a first heat exchanger; a second heat exchanger; and an air rejection port arranged between the first and second heat exchanger; wherein: in a first operation mode of the system, the first heat exchanger is used for cooling in the system and the second heat exchanger is used for heating in the system; in a second operation mode of the system, the first heat exchanger is used for heating in the system and the second heat exchanger is used for cooling in the system; and the air rejection port is arranged for rejecting at least a portion of air, transported in the system, to outside environment of the vehicle in any one of the at least two operation modes of the system.

The HVAC system may be specifically arranged or configured to transport or guide air through the first heat exchanger and/or the second heat exchanger. The HVAC system may comprise at least one flap being arrangeable or controllable to a specific position, so as to limit and/or allow an air flow to aid the transportation or guiding of the air in a desired path within the system.

The transported air may thermally interact with the first heat exchanger and/or the second heat exchanger. Through thermal interaction, the first heat exchanger and/or the second heat exchanger may heat or cool the air passing therethrough and/or may be heated or cooled by the air passing therethrough, e.g., depending on the relative temperature difference between the air passing therethrough and the temperature of the heat exchangers. That is, the heat exchangers may deliver thermal energy to the system and/or gain the thermal energy from the system.

Different portions of the first heat exchanger and/or the second heat exchanger may be exposed to the respective transported air having different temperatures. Consequently, different portions of the first heat exchanger and/or the second heat exchanger may be used for different purposes. For instance, when the first heat exchanger is used for cooling, a first portion of the first heat exchanger may be used to dry the air flowing therethrough, whereas a second portion of the first heat exchanger may be used to gain thermal energy from the air (cold or hot) flowing therethrough. Then the air, transported through the first heat exchanger, may selectively be rejected to the outside of the system via the air rejection port. Having such partition of a heat exchanger and transporting respective air therethrough improves the thermal efficiency of the system.

The first and second heat exchangers may be thermally coupled, i.e., a thermal energy is transferred therebetween, to a respective first and second thermal sources. The first thermal source may be the same as or different from the second thermal source. A thermal source may be a reservoir, e.g., a coolant reservoir and/or a refrigerant reservoir. A thermal source and the respective thermally coupled heat exchanger may form a thermal loop, e.g., a closed loop. A thermal source may be capable of providing thermal energy for both heating and cooling to the respective heat exchanger, e.g., by means of switchable valves connected between the respective heat exchanger and the thermal source.

When a heat exchanger is capable of both heating and cooling, only one air rejection port being arranged between the first and second heat exchanger may suffice to dump the air, i.e., being transported through the heat exchanger and have thermally interacted with the heat exchanger, outside of the system, especially without changing the sequence of the air flow in the system.

Herein, the term "arranged" may refer to being mechanically positioned and/or structured, unless otherwise specified.

When it is desired to condition the air (i.e., cooling or heating), a single heat exchanger may be arranged or used to deliver thermal energy to the transported air. Having a further heat exchanger, and at least part thereof being arranged or used for the other purpose (i.e., heating or cooling, respectively) may enable gaining thermal energy from the transported air. The transported air delivering thermal energy to the system may be rejected to the outside of the system, once thermal energy is transferred. As a result, the net thermal energy in the system may reduce, which means that the thermal efficiency of the system improves, specifically over a system with a single heat exchanger used solely to condition the air.

According to an example, the system is arranged for re-circulating cabin air obtained from cabin side of the vehicle.

Herein, the term "obtained" may refer to "received", "delivered", etc., unless otherwise specified. Further, the space inside the vehicle may be referred to as the "cabin side", to which the conditioned air is delivered. By re-circulating cabin air, the system may (re-)gain or restore the thermal energy from the cabin air, which in turn reduces the net thermal energy. In other words, the thermal efficiency of the system is improved.

According to an example, the air transported in the system is the re-circulated cabin air and/or outside air obtained from the outside of the vehicle.

According to an example, the rejection port is the only rejection port of the system.

According to an example, the system comprises a first air channel and a second air channel for transporting air in the system.

According to an example, the system comprises a first wall for arranging the first air channel and the second air channel in the system.

The first wall may be shared by the first air channel and the second air channel. The first wall may separate the first air channel from the second air channel.

According to an example, the first air channel comprises a first sub-channel and a second sub-channel.

According to an example, the system comprises a second wall for arranging the first sub-channel and the second sub-channel in the first air channel.

The second wall may be shared by the first sub-channel and the second sub-channel in the first air channel. The second wall may separate the first sub-channel from the second sub-channel in the first air channel.

According to an example, depending on the operation mode of the system, the first air channel is arranged for transporting in the system the recirculated cabin air or the outside air and the second air channel is arranged for transporting in the system the recirculated cabin air or the outside air.

Herein, when a channel is arranged for transporting air, an air path may be defined, e.g., by positioning the at least one flap to a specific position, such that the air is guided and flows through the channel.

The two air channels allow transportation of the same or different air (i.e., the re-circulated cabin air and/or the outside air) therethrough, and the separate paths for such transported air enable different usage of the transported air. For instance, the air transported via the first air channel may be conditioned and subsequently delivered to the cabin side, whereas the air transported via the second air channel may be used to gain thermal energy from the transported air. This may improve the thermal efficiency of the system.

According to an example, the system comprises a first blower, to which the first air channel is connected and by use of which air in the first air channel is transported, and a second blower, to which the second air channel is connected and by use of which air in the second air channel is transported.

According to an example, the first blower and the second blower are arranged before the first heat exchanger.

According to an example, the air, transported via the first air channel, bypasses the first heat exchanger and/or is transported via an upper portion the first heat exchanger.

Herein, the term "upper" may not indicate any orientation, but rather indicates one of the two portions of the first heat exchanger. Further, the term "portion" may indicate a part of whole of the first heat exchanger.

According to an example, the first sub-channel of the first air channel is arranged to transport air by bypassing the first heat exchanger and the second sub-channel of the first air channel is arranged to transport air via the upper portion of the first heat exchanger.

According to an example, the first air channel is arranged to divide, after the first heat exchanger, the air, transported via the first air channel depending on the operation mode of the system.

Herein, the term "divide" may refer to guiding the air to different paths, e.g., by means of positioning the at least one flap in a specific position. For instance, a portion of the air is guided to a first path, and the remaining portion of the air is guided to a second path.

The at least one flap may be part of the first air channel.

The at least one flap may be arranged after the first heat exchanger, and may be arranged to divide, after the first heat exchanger, the air, transported via the first air channel depending on the operation mode of the system.

According to an example, after the first heat exchanger, the first air channel is arranged for passing at least a part of the air, transported via the first air channel, to the second heat exchanger and/or for providing at least a part of the air, transported via the first air channel, to a core bypass channel of the system, wherein the core bypass channel is arranged for transporting air to the cabin side by bypassing the second heat exchanger.

Transporting air through the core bypass channel, thereby bypassing the second heat exchanger, may allow supply of the air at a first temperature different from the air at a second temperature obtained by passing through the second heat exchanger. The air at different temperatures could be mixed together to reach a desired temperature. This may be particularly advantageous when different climate zones in the vehicle require different temperatures.

According to an example, the second air channel is arranged for transporting air towards the air rejection port.

According to an example, the second air channel is arranged for passing the air, transported via the second air channel, to the first heat exchanger, wherein after passing the first heat exchanger, the air is rejected to the outside environment of the vehicle via the air rejection port.

According to an example, the core bypass channel of the system is utilized for adjusting temperature in cabin of the vehicle according to temperature requested for the cabin side of the vehicle.

According to an example, the at least two operation modes of the system comprise at least one of the following: a cabin heating mode; a cabin reheat mode; a cabin reheat and heat recovery mode; and/or a cabin cooling mode.

According to an example, in the cabin heating mode, the first heat exchanger is used for cooling in the system and the second heat exchanger is used for heating in the system.

According to an example, in the cabin heating mode, the first air channel is selectively arranged for transporting the outside air or the re-circulated cabin air in the system.

Herein, when a channel is selectively arranged, the channel may allow the flow of either outside air or the re-circulated cabin air to be transported therethrough, and simultaneously limit the flow of the other air, unless otherwise specified.

According to an example, in the cabin heating mode, the first sub-channel of the first air channel is arranged for transporting air by bypassing the first heat exchanger and the second sub-channel of the first air channel is arranged for transporting air via the upper portion of the first heat exchanger.

According to an example, in the cabin heating mode, the first sub-channel of the first air channel is arranged, upon transporting air by bypassing the first heat exchanger, for transporting the air to the second heat exchanger for heating and distributing at the cabin side of the vehicle.

According to an example, in the cabin heating mode, the second sub-channel of the first air channel is arranged for: transporting air via the upper portion of the first heat exchanger towards the rejection port; or transporting air via the upper portion of the first heat exchanger to the second heat exchanger for distributing at the cabin side of the vehicle, wherein transport of the air towards the rejection port is prevented; or transporting air via the upper portion of the first heat exchanger, wherein upon the transporting of the air via the upper portion of the first heat exchanger the second sub-channel of the first air channel is selectively arranged for: transporting the air towards the rejection port; or transporting the air to the second heat exchanger for distributing at the cabin side of the vehicle, wherein transport of the air towards the rejection port is prevented.

According to an example, in the cabin heating mode, the second air channel is arranged for transporting the outside air in the system.

According to an example, in the cabin heating mode, the second air channel is arranged for passing the air, transported via the second air channel, to the first heat exchanger, wherein after passing the first heat exchanger, the air is rejected to the outside environment of the vehicle via the air rejection port.

According to an example, in the cabin heating mode, the core bypass channel is selectively closed or at least partially opened depending on the temperature requested for the cabin side of the vehicle.

Herein, when a channel is selectively closed, the air may not be transported through the channel. When a channel is at least partially opened, a portion of the air is transported through the core bypass channel.

The system in the cabin heating mode gains thermal energy from the air, transported through the lower portion of the first heat exchanger, and optionally the upper portion of the first heat exchanger. This improves the thermal efficiency of the system.

According to an example, in the cabin reheat mode, the first heat exchanger is used for cooling in the system and the second heat exchanger is used for heating in the system.

According to an example, in the cabin reheat mode, the first air channel is selectively arranged for transporting the outside air or the re-circulated cabin air in the system.

According to an example, in the cabin reheat mode, the first sub-channel of the first air channel is closed.

Herein, when a channel is closed, the air may not be transported through the channel, unless otherwise specified.

According to an example, in the cabin reheat mode, the second sub-channel of the first air channel is arranged for transporting air via the upper portion of the first heat exchanger to the second heat exchanger for distributing at the cabin side of the vehicle, wherein transport of the air towards the rejection port is prevented.

According to an example, in the cabin reheat mode, the second air channel is arranged for transporting the outside air in the system.

According to an example, in the cabin reheat mode, the second air channel is arranged for passing the air, transported via the second air channel, to the first heat exchanger, wherein after passing the first heat exchanger, the air is rejected to the outside environment of the vehicle via the air rejection port.

According to an example, in the cabin reheat mode, the bypass channel is selectively closed or at least partially opened depending on the temperature requested for the cabin side of the vehicle.

The system in the cabin reheat mode firstly cools the air by transporting the air through the first heat exchanger, which dehumidifies the air, then the cooled air is heated (or the cooled air is "reheated"). Consequently, the air transported to the cabin is dehumidified. Further, the system in the cabin reheat mode gains thermal energy from the air, transported through the lower portion of the first heat exchanger. This improves the thermal efficiency of the system.

According to an example, in the cabin reheat and heat recovery mode, the first heat exchanger is used for cooling in the system and the second heat exchanger is used for heating in the system.

According to an example, in the cabin reheat and heat recovery mode, the first air channel is arranged for transporting the outside air in the system.

According to an example, in the cabin reheat and heat recovery mode, the first sub-channel of the first air channel is closed.

According to an example, in the cabin reheat and heat recovery mode, the second sub-channel of the first air channel is arranged for transporting air via the upper portion of the first heat exchanger to the second heat exchanger for distributing at the cabin side of the vehicle, wherein transport of the air towards the rejection port is prevented.

According to an example, in the cabin reheat and heat recovery mode, the second air channel is selectively arranged for transporting the re-circulated cabin air or the outside air in the system.

According to an example, in the cabin reheat and heat recovery mode, the second air channel is arranged for passing the air, transported via the second air channel, to the first heat exchanger, wherein after passing the first heat exchanger, the air is rejected to the outside environment of the vehicle via the air rejection port.

According to an example, in the cabin reheat and heat recovery mode, the bypass channel is selectively closed or at least partially opened depending on the temperature requested for the cabin side of the vehicle.

The system in the cabin reheat and heat recovery mode dehumidifies the air as previously disclosed in the cabin reheat. Further, the system in such mode gains thermal energy from the air, transported through the lower portion of the first heat exchanger. This improves the thermal efficiency of the system.

According to an example, in the cabin cooling mode, the first heat exchanger is used for heating in the system and the second heat exchanger is used for cooling in the system.

According to an example, in the cabin cooling mode, the first air channel is selectively arranged for transporting the outside air or the re-circulated cabin air in the system.

According to an example, in the cabin cooling mode, the first sub-channel of the first air channel is arranged for transporting air by bypassing the first heat exchanger and the second sub-channel of the first air channel is arranged for transporting air via the upper portion of the first heat exchanger.

According to an example, in the cabin cooling mode, the first sub-channel of the first air channel is arranged, upon transporting air by bypassing the first heat exchanger, for transporting the air to the second heat exchanger for cooling and distributing at the cabin side of the vehicle.

According to an example, in the cabin cooling mode, the second sub-channel of the first air channel is arranged for transporting air via the upper portion of the first heat exchanger towards the rejection port.

According to an example, in the cabin cooling mode, the second air channel is arranged for transporting the outside air in the system.

According to an example, in the cabin cooling mode, the second air channel is arranged for passing the air, transported via the second air channel, to the first heat exchanger, wherein after passing the first heat exchanger, the air is rejected to the outside environment of the vehicle via the air rejection port.

According to an example, in the cabin cooling mode, the bypass channel is selectively closed or at least partially opened depending on the temperature requested for the cabin side of the vehicle.

The system in the cabin cooling mode rejects thermal energy from the first heat exchanger to the air, transported through the lower portion of the first heat exchanger, and optionally the upper portion of the first heat exchanger. The air having gone through the first heat exchanger is then rejected via the rejection port. This improves the thermal efficiency of the system.

According to a second aspect, there is provided a vehicle comprising a heating, ventilation, and air conditioning, HVAC, system according to any one of the examples of the first aspect as disclosed herein.

According to a third aspect, there is provided a use of a heating, ventilation, and air conditioning, HVAC, system according to any one of the examples of the first aspect as disclosed herein for regulating climate and/or temperature in a cabin of a vehicle.

The third aspect may be at least partly computer-implemented, and may be implemented in software or in hardware, or in software and hardware. Further, the use or any method related thereto may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

### BRIEF DESCRIPTION OF DRAWINGS

Examples of the disclosure will be described in the following with reference to the following drawings.
- Figure 1: shows a conventional HVAC system.
- Figure 2: shows an HVAC system according to an embodiment of the present disclosure.
- Figure 3: shows an HVAC system for transporting the air through the core bypass according to an embodiment of the present disclosure.
- Figure 4: shows an HVAC system under cabin heating mode according to an embodiment of the present disclosure.
- Figure 5: shows an HVAC system under cabin reheat mode according to an embodiment of the present disclosure.
- Figure 6: shows an HVAC system under cabin reheat and heat recovery mode according to an embodiment of the present disclosure.
- Figure 7: shows an HVAC system under cabin cooling mode according to an embodiment of the present disclosure.

### DETAILED DESCRIPTION

The Figures are merely schematic representations and serve only to illustrate examples of the disclosure. Identical or equivalent elements are in principle provided with the same reference signs.

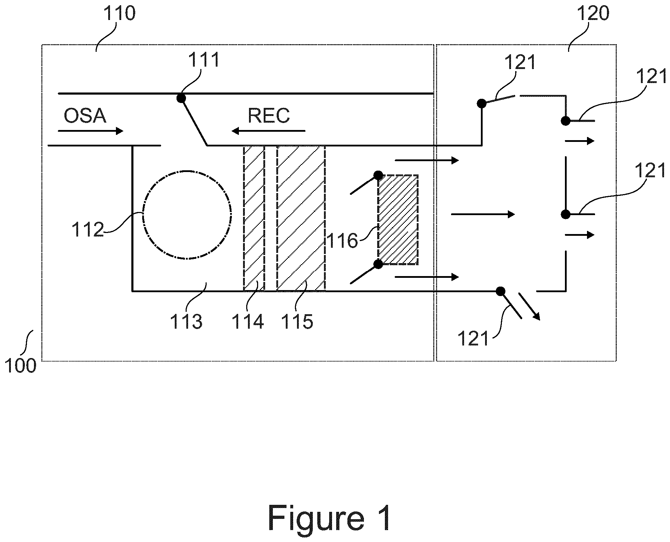

A conventional heating, ventilation, and air conditioning (HVAC) system 100 for a vehicle is shown in Figure 1. The system 100 comprises a thermal portion 110 and a distribution portion 120, and usually consists of a blower 112 which transports air from the outside of the vehicle to the inside of cabin. The air is transported using an air inlet flap 111. The air is moved through the air channel 113, then through the cabin air filter 114, and then through the heat exchangers 115 and 116 that either heat or cool the air. The heat exchangers are connected to an AC system or a thermal system. The air is then fed through various air channels that distribute the conditioned air into the cabin. Air flaps 111 and 121, which are operated by electric actuators, manipulate the air to provide the correct air amount and requested temperature by mixing hot and cold airflow. The air to the blower can either be taken from the re-circulated air from the cabin (REC) or from the outside environment (OSA).

The arrows in the figures described herein indicate the flow of the air in the system.

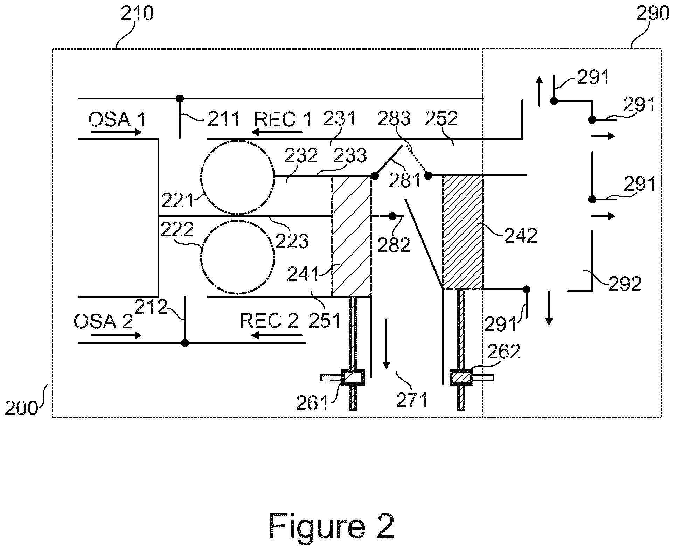

Figure 2 shows an HVAC system 200 according to an embodiment of the present disclosure. The system 200 shown in Figure 2 is for a vehicle, and the system 200 is operable in at least two operation modes. The HVAC system 200 comprises a first heat exchanger 241 241, a second heat exchanger 242, and an air rejection port 271 arranged between the first and second heat exchangers 241 242. In a first operation mode of the system 200, the first heat exchanger 241 is used for cooling in the system 200 and the second heat exchanger 242 is used for heating in the system 200. In a second operation mode of the system 200, the first heat exchanger 241 is used for heating in the system 200 and the second heat exchanger 242 is used for cooling in the system 200. The air rejection port 271 is arranged for rejecting at least a portion of air, transported in the system 200, to outside environment of the vehicle in any one of the at least two operation modes of the system 200.

For illustrative purposes, the HVAC system 200 shown in Figure 2 further comprises a first valve 261 being arranged between the first heat exchanger 241 and a first reservoir, e.g., a coolant reservoir or a refrigerant reservoir, and a second valve 262 being arranged between the second heat exchanger 242 and a second reservoir, e.g., a coolant reservoir or a refrigerant reservoir. The first and second heat exchangers 241 and 242 are respectively connected to the first and second reservoir via passages such as pipes for transferring the coolant or gas. The first and second valves 261 and 262 controls the flow of the coolant or gas through the passages. The first valve 261 and the second valve 262 are independently controllable. When the first valve 261 and/or the second valve 262 is set to a heating side or cooling side, the coolant or gas for heating or cooling, respectively, is provided to the respective first and second heat exchangers 241 242.

The system 200 further comprises a first air channel and a second air channel 251 for transporting air in the system 200, and a first wall 223 for arranging, e.g., dividing, the first air channel and the second air channel 251 in the system 200. The first air channel comprises a first sub-channel 231 and a second sub-channel 232, and a second wall 233 for arranging, i.e., dividing, the first sub-channel 231 and the second sub-channel 232 in the first air channel. The first sub-channel 231 is arranged such that the air transported therethrough bypasses the first heat exchanger 241. The first heat exchanger 241 comprises an upper portion being arranged after the second sub-channel 232 such that the air transported via the second sub-channel 232 thermally interacts with the upper portion of the first heat exchanger 241. The first heat exchanger 241 comprises a lower portion being arranged after the second air channel 251 such that the air transported via the second air channel 251 thermally interacts with the lower portion of the first heat exchanger 241. It is understood that the terms "upper" and "lower" may not indicate any orientation, but rather indicate two portions or sections of the first heat exchanger 241. It is further understood that the phrase "A is arranged after B" may not indicate any orientation of A and/or B, but rather indicates the sequence through which the transported air goes through, e.g., the transported air goes through first A, then B.

The system 200 further comprises a core bypass channel 252 being arranged for transporting the air to the cabin side by bypassing the second heat exchanger 242. The air transported via the first air channel either passes through the core bypass channel or the second heat exchanger 242.

The system 200 further comprises a first blower 221, to which the first air channel is connected and by use of which air in the first air channel is transported, and a second blower 222, to which the second air channel 251 is connected and by use of which air in the second air channel 251 is transported. The first blower 221 and the second blower 222 are arranged before the first heat exchanger 241.

The system 200 further comprises a first air flap 211, a second air flap 212, a third air flap 281, a fourth air flap 282, and a fifth air flap 283. The first and second air flaps 211 and 212 are independently controllable and selectively arrangeable to transport either the outside air from the outside the vehicle or the re-circulated cabin air from the cabin through the respective first and second air channels 251. This may simultaneously limit or block another air path, different from the desired transported air, in the system 200. For instance, when the first air flap 211 is arranged to transport the outside air through the first air channel, the arranged first air flap 211 may limit the re-circulated cabin air from entering the first air channel. The third, fourth, and fifth air flaps 281, 282, and 283 are controllable and arrangeable to a specific position. Any combination of air flaps herein may be physically connected to one another and/or jointly controllable. Additionally or alternatively, any one of the air flaps herein may be individually controllable.

The system 200 may be portioned into a thermal portion 210 and a distribution portion 290.

It is understood that any one of the first to fifth air claps 211, 212, 281, 282, and 283 may be implemented in different forms to achieve such guiding and/or limiting of an air passage.

Depending on the operation mode of the system 200, the first to fifth air flap 283s are arranged to a specific position, such that the first air channel is arranged for transporting in the system 200 the re-circulated cabin air or the outside air, and the second air channel 251 is arranged for transporting in the system 200 the re-circulated cabin air or the outside air.

The system 200 further comprises a cabin module 292 being arranged for transporting the air-conditioned air, i.e., either heat exchanged with the second heat exchanger 242 or the transported air bypassing the second heat exchanger 242, to the cabin side of the vehicle. The system 200 further comprises a plurality of distribution air flaps 291 being arranged for selectively guiding the air into the cabin via the cabin module 292.

As it will become evident from the disclosure to follow, the HVAC system according to any one of the embodiments described herein is capable of using the thermal energy in the transported outside air and/or the re-circulated cabin air in the thermal and/or refrigerant loop by passing the air through the first heat exchanger 241 in the HVAC system. The air, transported through the first heat exchanger 241, is then either fed to the cabin or rejected to the outside of the vehicle via the rejection port 271. The rejection port 271 may be the only rejection port 271 of the system, because only one air rejection port 271 may be sufficient or needed as the first and second heat exchangers 241 and 242 can be switched by the respective first and second valves 261 and 262 on the coolant/refrigerant loop. The HVAC system achieves, among others, an increase in the thermal efficiency in the complete thermal system loop, i.e., a loop including the HVAC system, since the already heated air in the cabin can be re-used on the thermal heat pump side or the thermal energy in the ambient air can be transferred to the thermal loop as well

The following describes the HVAC system according to any one of the embodiments disclosed herein for supporting different temperature zones in vehicle, e.g., a driver side, a passenger side, the 2^{nd} row, and/or the 3^{rd} row. To support that, the HVAC system may need to provide separated cold and warm air into the cabin module 292, where the two air streams are mixed according to the requested temperatures in the different zones. This may be achieved by bypassing the second heat exchanger 242.

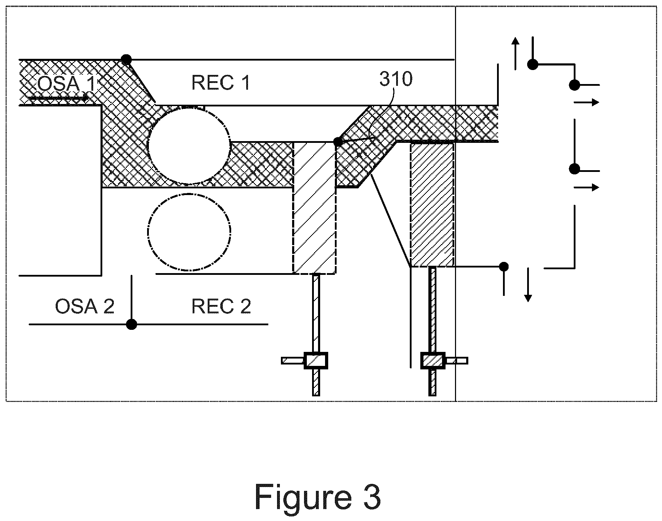

It is noted that the HVAC system shown in Figures 3 to 7 comprise the same components as the HVAC system of Figure 2. Thus, for simplicity, the reference numerals in Figure 2 are adhered to, and the reference numerals in Figures 3 to 7 are omitted. Any differing or additive component is provided with the respective reference numeral.

In the embodiment shown in Figure 3, the first air flap 211 is arranged to transport the outside air transported through the first air channel, and the third, fourth, and fifth air flaps 281, 282, and 283 are arranged to transport the air, transported through the second sub-channel 232 via the first blower 221 and through the first heat exchanger 241, through the core bypass channel 252. As a result, the outside air is transported through the first blower 221, then through the second sub-channel 232 in the first air channel, then through the upper portion of the heat exchanger, and then through the core bypass channel 252 of the system 200. The shown system 200 further comprises an optional air flap 310 for controlling an air flow rate of the air through the core bypass channel 252. This can be divided further depending on the number of temperature zones in the compartment.

Such temperature control for different zones in the vehicle is implementable in conjunction with any operation mode of the HVAC according to any one of the embodiments disclosed herein.

It is understood that the embodiment shown above in conjunction with Figure 3 is a specific embodiment, and any combination of the following embodiments may be implemented to achieve the aforementioned technical effect.

In an embodiment, the system is arranged for re-circulating cabin air obtained from cabin side of the vehicle.

In an embodiment, the air transported in the system is the re-circulated cabin air and/or outside air obtained from the outside of the vehicle.

In an embodiment, the rejection port is the only rejection port of the system.

In an embodiment, the system comprises a first air channel and a second air channel for transporting air in the system.

In an embodiment, the system comprises a first wall for arranging the first air channel and the second air channel in the system; and/or

In an embodiment, the first air channel comprises a first sub-channel and a second sub-channel.

In an embodiment, the system comprises a second wall for arranging the first sub-channel and the second sub-channel in the first air channel.

In an embodiment, depending on the operation mode of the system, the first air channel is arranged for transporting in the system the recirculated cabin air or the outside air and the second air channel is arranged for transporting in the system the recirculated cabin air or the outside air.

In an embodiment, the system comprises a first blower, to which the first air channel is connected and by use of which air in the first air channel is transported, and a second blower, to which the second air channel is connected and by use of which air in the second air channel is transported.

In an embodiment, the first blower and the second blower are arranged before the first heat exchanger.

In an embodiment, the air, transported via the first air channel, bypasses the first heat exchanger and/or is transported via an upper portion of the first heat exchanger.

In an embodiment, the first sub-channel of the first air channel is arranged to transport air by bypassing the first heat exchanger and the second sub-channel of the first air channel is arranged to transport air via the upper portion of the first heat exchanger.

In an embodiment, the first air channel is arranged to divide, after the first heat exchanger, the air, transported via the first air channel depending on the operation mode of the system, wherein, after the first heat exchanger, the first air channel is arranged for passing at least a part of the air, transported via the first air channel, to the second heat exchanger and/or for providing at least a part of the air, transported via the first air channel, to a core bypass channel of the system, wherein the core bypass channel is arranged for transporting air to the cabin side by bypassing the second heat exchanger.

In an embodiment, the second air channel is arranged for transporting air towards the air rejection port.

In an embodiment, the second air channel is arranged for passing the air, transported via the second air channel, to the first heat exchanger, wherein after passing the first heat exchanger, the air is rejected to the outside environment of the vehicle via the air rejection port.

In an embodiment, the core bypass channel of the system is utilized for adjusting temperature in cabin of the vehicle according to temperature requested for the cabin side of the vehicle.

The following describes the HVAC system under operation modes according to any one of the embodiments.

The HVAC system 200 may be considered in certain modes, e.g., depending on if the system 200 is used in hot, cold or humid ambient conditions. The operation modes may include at least one of the following: a cabin heating mode (e.g., when in cold ambient temperature); a cabin reheat mode (e.g., when to dehumidify mid temperature ambient air and/or the recirculated cabin air); a cabin heat recovery mode (e.g., when to re-use energy from cabin); and a cabin cooling (e.g., when in warm ambient temperature). These operation modes can be further modified depending on outside and/or vehicle compartment conditions.

Depending on the mode, the first to fifth air flap 283s in the HVAC system 200 are arranged or moved to certain position to guide the air in a desired path in the HVAC system 200, the first and second blowers 221 222 can vary the airflow rate of the transported air in the HVAC system 200, and the first and second heat exchangers 241 and 242 are controlled by the connected thermal or refrigerant system 200. The arranged first to fifth air flap 283s may simultaneously block or limit an air path entirely or partially.

### Operation mode 1: cabin heating mode

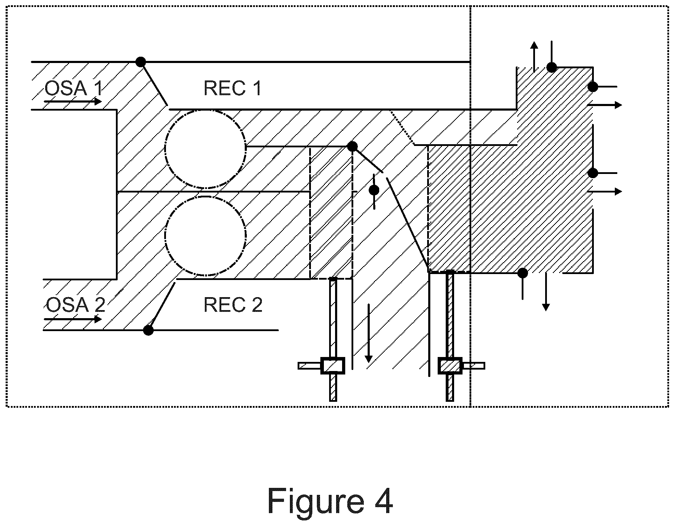

Under the cabin heating mode, the HVAC system 200 may be arranged as shown in Figure 4. The first air flap 211 and the second air flap 212 are arranged to transport the outside air through the first air channel and the second air channel 251, respectively. The first and second blowers 221 and 222 operate and guide the air through the respective first and second air channels 251. The third and fifth air flaps 281, 282, and 283 are arranged for guiding the air, transported through the first sub-channel 231, to the second heat exchanger 242. The guided air is heated by the second heat exchanger 242 and distributed into the cabin via the cabin module 292. The third and fourth air flaps 281 and 282 are arranged for guiding the air, transported through the second sub-channel 232 and through the upper portion of the first heat exchanger 241, to the rejection port 271. Such arrangement of the air flaps may maximize the active surface of the first heat exchanger 241. The air, transported through the second air channel 251 via the second blower 222, is guided through the lower portion of the first heat exchanger 241, through which thermal energy is transferred from the air into the thermal system. The air which has gone through the first heat exchanger 241 is then rejected, i.e., thrown out, via the rejection port 271. The first and second valves 261 and 262 are set to the cooling and heating side, respectively. The core bypass channel 252 may be closed, i.e., air is not guided therethrough, or at least partially opened, i.e., at least the air is partially guided therethrough, when for instance different temperature for different temperature zones within the cabin is required.

It is understood that the embodiment shown above in conjunction with Figure 4 is a specific embodiment, and any combination of the following embodiments may be implemented to achieve the aforementioned technical effect.

In an embodiment, in the cabin heating mode, the first heat exchanger is used for cooling in the system and the second heat exchanger is used for heating in the system.

In an embodiment, in the cabin heating mode, the first air channel is selectively arranged for transporting the outside air or the re-circulated cabin air in the system.

In an embodiment, in the cabin heating mode, the first sub-channel of the first air channel is arranged for transporting air by bypassing the first heat exchanger and the second sub-channel of the first air channel is arranged for transporting air via the upper portion of the first heat exchanger.

In an embodiment, in the cabin heating mode, the first sub-channel of the first air channel is arranged, upon transporting air by bypassing the first heat exchanger, for transporting the air to the second heat exchanger for heating and distributing at the cabin side of the vehicle.

In an embodiment, in the cabin heating mode, the second sub-channel of the first air channel is arranged for: transporting air via the upper portion of the first heat exchanger towards the rejection port; or transporting air via the upper portion of the first heat exchanger to the second heat exchanger for distributing at the cabin side of the vehicle, wherein transport of the air towards the rejection port is prevented; or transporting air via the upper portion of the first heat exchanger, wherein upon the transporting of the air via the upper portion of the first heat exchanger the second sub-channel of the first air channel is selectively arranged for: transporting the air towards the rejection port; or transporting the air to the second heat exchanger for distributing at the cabin side of the vehicle, wherein transport of the air towards the rejection port is prevented.

In an embodiment, in the cabin heating mode, the second air channel is arranged for transporting the outside air in the system.

In an embodiment, in the cabin heating mode, the second air channel is arranged for passing the air, transported via the second air channel, to the first heat exchanger, wherein after passing the first heat exchanger, the air is rejected to the outside environment of the vehicle via the air rejection port.

In an embodiment, in the cabin heating mode, the core bypass channel is selectively closed or at least partially opened depending on the temperature requested for the cabin side of the vehicle.

### Operation mode 2: cabin reheat mode

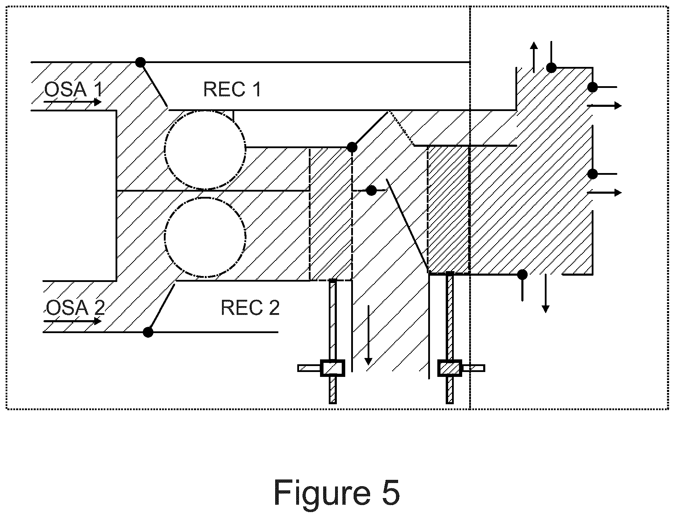

Under the cabin reheat mode, the system 200 according to an embodiment of the present disclosure arranged as shown in Figure 5. The first and second air flaps 211 and 212 are arranged for transporting the outside air through the respective first and second air channels 251. The third air flap 281 is arranged for limiting the air flow of the air, transported through the first sub-channel 231 of the first air channel, from flowing further towards the cabin. The third, fourth, and fifth air flaps 281, 282, and 283 are arranged for guiding the air, transported through the second sub-channel 232 of the first air channel and through the upper portion of the first heat exchanger 241, to the second heat exchanger 242. Through this path, the air is dried via condensation on the surface of the first heat exchanger 241, and the conditioned air through the first heat exchanger 241 is then heated via the second heat exchanger 242. The heated air is distributed into the cabin via the cabin module 292. The air, transported through the second air channel 251 via the second blower 222, is guided through the lower portion of the first heat exchanger 241, through which thermal energy is transferred from the air into the thermal system. The air which has gone through the first heat exchanger 241 is then rejected, i.e., thrown out, via the rejection port 271. It is noted that the fifth air flap 283 is closed towards, i.e., limiting the air flow into, the rejection port 271 to avoid any of the air bypassing the second sub-channel 232. The first and second valve 261 and 262 are respectively set to the cooling and heating side. The core bypass channel 252 may be closed, i.e., air is not guided therethrough, or at least partially opened, i.e., at least the air is partially guided therethrough, when for instance different temperature for different temperature zones within the cabin is required.

It is understood that the embodiment shown above in conjunction with Figure 5 is a specific embodiment, and any combination of the following embodiments may be implemented to achieve the aforementioned technical effect.

In an embodiment, in the cabin reheat mode, the first heat exchanger is used for cooling in the system and the second heat exchanger is used for heating in the system.

In an embodiment, in the cabin reheat mode, the first air channel is selectively arranged for transporting the outside air or the re-circulated cabin air in the system.

In an embodiment, in the cabin reheat mode, the first sub-channel of the first air channel is closed.

In an embodiment, in the cabin reheat mode, the second sub-channel of the first air channel is arranged for transporting air via the upper portion of the first heat exchanger to the second heat exchanger for distributing at the cabin side of the vehicle, wherein transport of the air towards the rejection port is prevented.

In an embodiment, in the cabin reheat mode, the second air channel is arranged for transporting the outside air in the system.

In an embodiment, in the cabin reheat mode, the second air channel is arranged for passing the air, transported via the second air channel, to the first heat exchanger, wherein after passing the first heat exchanger, the air is rejected to the outside environment of the vehicle via the air rejection port.

In an embodiment, in the cabin reheat mode, the bypass channel is selectively closed or at least partially opened depending on the temperature requested for the cabin side of the vehicle.

### Operation mode 3: cabin reheat and heat recovery mode

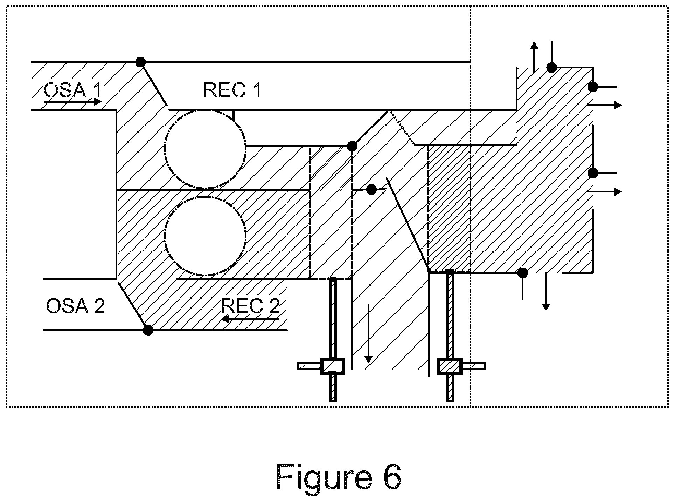

Under the cabin reheat and heat recovery mode, the system 200 according to an embodiment of the present disclosure arranged as shown in Figure 6. The first air flap 211 is arranged to transport the outside air through the first air channel. The third air flap 281 and the fourth air flap 282 is arranged for guiding the air, guided through the second sub-channel 232 via the first blower 221 and through the first heat exchanger 241, to the second heat exchanger 242. The third air flap 281 is arranged for limiting the air, transported through the first sub-channel 231, from flowing further towards the cabin. The third, fourth, and fifth air flaps 281, 282, and 283 are arranged for guiding the air, transported through the second sub-channel 232 of the first air channel and through the upper portion of the first heat exchanger 241, to the second heat exchanger 242. Through this path, the air is dried via condensation on the surface of the first heat exchanger 241, and the conditioned air through the first heat exchanger 241 is then heated via the second heat exchanger 242. The heated air is distributed into the cabin via the cabin module 292. The second air flap 212 is arranged to transport the re-circulated cabin air through the second air channel 251 via the second blower 222. The air, transported through the second air channel 251 via the second blower 222, is guided through the first heat exchanger 241, where thermal energy is transferred from the air into the thermal system. The air, transported through the first heat exchanger 241 is then rejected, i.e., thrown out, via the rejection port 271. It is noted that the fifth air flap 283 is closed towards, i.e., limiting the air flow into, the rejection port 271 to avoid any of the air bypassing the second sub-channel 232. The first and second valves 261 and 262 are respectively set to the cooling and heating side. The core bypass channel 252 may be closed, i.e., air is not guided therethrough, or at least partially opened, i.e., at least the air is partially guided therethrough, when for instance different temperature for different temperature zones within the cabin is required.

It is understood that the embodiment shown above in conjunction with Figure 6 is a specific embodiment, and any combination of the following embodiments may be implemented to achieve the aforementioned technical effect.

In an embodiment, in the cabin reheat and heat recovery mode, the first heat exchanger is used for cooling in the system and the second heat exchanger is used for heating in the system.

In an embodiment, in the cabin reheat and heat recovery mode, the first air channel is arranged for transporting the outside air in the system.

In an embodiment, in the cabin reheat and heat recovery mode, the first sub-channel of the first air channel is closed.

In an embodiment, in the cabin reheat and heat recovery mode, the second sub-channel of the first air channel is arranged for transporting air via the upper portion of the first heat exchanger to the second heat exchanger for distributing at the cabin side of the vehicle, wherein transport of the air towards the rejection port is prevented.

In an embodiment, in the cabin reheat and heat recovery mode, the second air channel is selectively arranged for transporting the re-circulated cabin air or the outside air in the system.

In an embodiment, in the cabin reheat and heat recovery mode, the second air channel is arranged for passing the air, transported via the second air channel, to the first heat exchanger, wherein after passing the first heat exchanger, the air is rejected to the outside environment of the vehicle via the air rejection port.

In an embodiment, in the cabin reheat and heat recovery mode, the bypass channel is selectively closed or at least partially opened depending on the temperature requested for the cabin side of the vehicle.

### Operation mode 4: cabin cooling mode

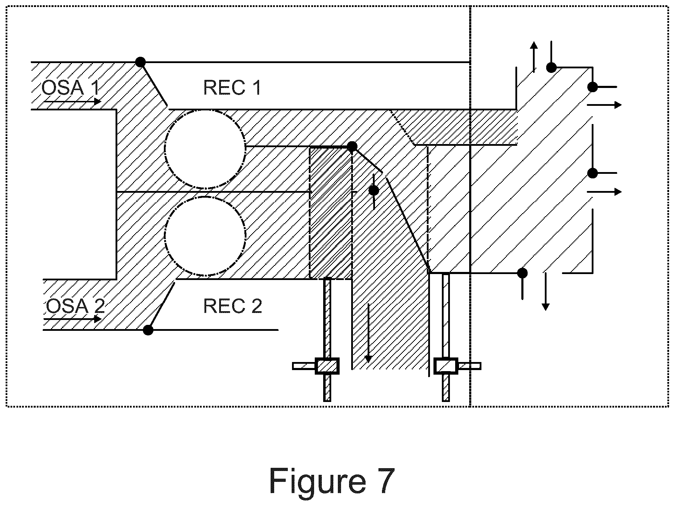

Under the cabin cooling mode, the system 200 according to an embodiment of the present disclosure arranged as shown in Figure 7. The first air flap 211 and the second air flap 212 are arranged to transport in the outside air through the first air channel and the second air channel 251, respectively. The third and fifth air flaps 281 and 283 are arranged for guiding the air, transported through the first sub-channel 231 of the first air channel via the first blower 221, to the second heat exchanger 242. The air through the second heat exchanger 242 is cooled, and the cooled air is distributed into the cabin via the cabin module 292. The third and fourth air flaps 281 and 282 are arranged for guiding the air, transported through the second sub-channel 232 of the first air channel via the first blower 221 and through the upper portion of the first heat exchanger 241, to the rejection port 271. Such arrangement of the air flaps may maximize the active surface of the first heat exchanger 241. The air, transported through the second air channel 251 via the second blower 222, is guided through the lower portion of the first heat exchanger 241, through which thermal energy is transferred from the thermal system into the air. The air which has gone through the first heat exchanger 241 is then rejected, i.e., thrown out, via the rejection port 271. The first and second valves 261 and 262 are respectively set to heating and cooling side. The core bypass channel 252 may be closed, i.e., air is not guided therethrough, or at least partially opened, i.e., at least the air is partially guided therethrough, when for instance different temperature for different temperature zones within the cabin is required.

It is understood that the embodiment shown above in conjunction with Figure 7 is a specific embodiment, and any combination of the following embodiments may be implemented to achieve the aforementioned technical effect.

In an embodiment, in the cabin cooling mode, the first heat exchanger is used for heating in the system and the second heat exchanger is used for cooling in the system.

In an embodiment, in the cabin cooling mode, the first air channel is selectively arranged for transporting the outside air or the re-circulated cabin air in the system.

In an embodiment, in the cabin cooling mode, the first sub-channel of the first air channel is arranged for transporting air by bypassing the first heat exchanger and the second sub-channel of the first air channel is arranged for transporting air via the upper portion of the first heat exchanger.

In an embodiment, in the cabin cooling mode, the first sub-channel of the first air channel is arranged, upon transporting air by bypassing the first heat exchanger, for transporting the air to the second heat exchanger for cooling and distributing at the cabin side of the vehicle.

In an embodiment, in the cabin cooling mode, the second sub-channel of the first air channel is arranged for transporting air via the upper portion of the first heat exchanger towards the rejection port.

In an embodiment, in the cabin cooling mode, the second air channel is arranged for transporting the outside air in the system.

In an embodiment, in the cabin cooling mode, the second air channel is arranged for passing the air, transported via the second air channel, to the first heat exchanger, wherein after passing the first heat exchanger, the air is rejected to the outside environment of the vehicle via the air rejection port.

In an embodiment, in the cabin cooling mode, the bypass channel is selectively closed or at least partially opened depending on the temperature requested for the cabin side of the vehicle.

The present disclosure further relates to a vehicle comprising a heating, ventilation, and air conditioning, HVAC, system according to any one of the embodiments disclosed herein.

The present disclosure yet further relates to a use of a heating, ventilation, and air conditioning, HVAC, system according to any one of the embodiments disclosed herein for regulating climate and/or temperature in a cabin of a vehicle.

The use of HVAC system may be at least partly computer-implemented, and may be implemented in software or in hardware, or in software and hardware. Further, the use or any method related thereto may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: Conventional HVAC system
- 110: Thermal portion
- 111: Air inlet flap
- 112: Blower
- 113: Air channel
- 114: Cabin air filter
- 115: Evaporator
- 116: Heat exchanger
- 120: Distribution portion
- 121: Air distribution flap
- 200: HVAC system
- 210: Thermal portion
- 211: First air flap
- 212: Second air flap
- 221: First blower
- 222: Second blower
- 223: First wall
- 231: First sub-channel
- 232: Second sub-channel
- 233: Second wall
- 241: First heat exchanger
- 242: Second heat exchanger
- 251: Second air channel
- 252: Core bypass channel
- 261: First valve
- 262: Second valve
- 271: Rejection port
- 281: Third air flap
- 282: Fourth air flap
- 283: Fifth air flap
- 220: Distribution portion
- 291: Plurality of distribution flaps
- 292: Cabin module

## Claims

1. A heating, ventilation, and air conditioning, HVAC, system for a vehicle, wherein the system is operable in at least two operation modes and the system comprises:
- a first heat exchanger;
- a second heat exchanger; and
- an air rejection port arranged between the first and second heat exchanger;
wherein:
- in a first operation mode of the system, the first heat exchanger is used for cooling in the system and the second heat exchanger is used for heating in the system;
- in a second operation mode of the system, the first heat exchanger is used for heating in the system and the second heat exchanger is used for cooling in the system; and
- the air rejection port is arranged for rejecting at least a portion of air, transported in the system, to outside environment of the vehicle in any one of the at least two operation modes of the system.

2. The system according to claim 1, wherein:
- the system is arranged for re-circulating cabin air obtained from cabin side of the vehicle; and/or
- the air transported in the system is the re-circulated cabin air and/or outside air obtained from the outside of the vehicle; and/or
- the rejection port is the only rejection port of the system; and/or
- the system comprises a first air channel and a second air channel for transporting air in the system; and/or
- the system comprises a first wall for arranging the first air channel and the second air channel in the system; and/or
- the first air channel comprises a first sub-channel and a second sub-channel; and/or
- the system comprises a second wall for arranging the first sub-channel and the second sub-channel in the first air channel; and/or
- depending on the operation mode of the system, the first air channel is arranged for transporting in the system the recirculated cabin air or the outside air and the second air channel is arranged for transporting in the system the recirculated cabin air or the outside air; and/or
- the system comprises a first blower, to which the first air channel is connected and by use of which air in the first air channel is transported, and a second blower, to which the second air channel is connected and by use of which air in the second air channel is transported; and/or
- the first blower and the second blower are arranged before the first heat exchanger.

3. The system according to claim 2, wherein:
- the air, transported via the first air channel, bypasses the first heat exchanger and/or is transported via an upper portion the first heat exchanger; and/or
- the first sub-channel of the first air channel is arranged to transport air by bypassing the first heat exchanger and the second sub-channel of the first air channel is arranged to transport air via the upper portion of the first heat exchanger; and/or
- the first air channel is arranged to divide, after the first heat exchanger, the air, transported via the first air channel depending on the operation mode of the system, wherein, after the first heat exchanger, the first air channel is arranged for passing at least a part of the air, transported via the first air channel, to the second heat exchanger and/or for providing at least a part of the air, transported via the first air channel, to a core bypass channel of the system, wherein the core bypass channel is arranged for transporting air to the cabin side by bypassing the second heat exchanger; and/or
- the second air channel is arranged for transporting air towards the air rejection port;
- the second air channel is arranged for passing the air, transported via the second air channel, to the first heat exchanger, wherein after passing the first heat exchanger, the air is rejected to the outside environment of the vehicle via the air rejection port.

4. The system according to claim 3, wherein the core bypass channel of the system is utilized for adjusting temperature in cabin of the vehicle according to temperature requested for the cabin side of the vehicle.

5. The system according to any one of the preceding claims, wherein the at least two operation modes of the system comprise at least one of the following:
- a cabin heating mode;
- a cabin reheat mode;
- a cabin reheat and heat recovery mode; and/or
- a cabin cooling mode.

6. The system according to claim 5, wherein in the cabin heating mode at least one of the following is implemented:
- the first heat exchanger is used for cooling in the system and the second heat exchanger is used for heating in the system; and/or
- the first air channel is selectively arranged for transporting the outside air or the re-circulated cabin air in the system; and/or
- the first sub-channel of the first air channel is arranged for transporting air by bypassing the first heat exchanger and the second sub-channel of the first air channel is arranged for transporting air via the upper portion of the first heat exchanger; and/or
- the first sub-channel of the first air channel is arranged, upon transporting air by bypassing the first heat exchanger, for transporting the air to the second heat exchanger for heating and distributing at the cabin side of the vehicle; and/or
- the second sub-channel of the first air channel is arranged for:
- transporting air via the upper portion of the first heat exchanger towards the rejection port; or
- transporting air via the upper portion of the first heat exchanger to the second heat exchanger for distributing at the cabin side of the vehicle, wherein transport of the air towards the rejection port is prevented; or
- transporting air via the upper portion of the first heat exchanger, wherein upon the transporting of the air via the upper portion of the first heat exchanger the second sub-channel of the first air channel is selectively arranged for: transporting the air towards the rejection port; or transporting the air to the second heat exchanger for distributing at the cabin side of the vehicle, wherein transport of the air towards the rejection port is prevented; and/or
- the second air channel is arranged for transporting the outside air in the system; and/or
- the second air channel is arranged for passing the air, transported via the second air channel, to the first heat exchanger, wherein after passing the first heat exchanger, the air is rejected to the outside environment of the vehicle via the air rejection port; and/or
- the core bypass channel is selectively closed or at least partially opened depending on the temperature requested for the cabin side of the vehicle.

7. The system according to claim 5, wherein in the cabin reheat mode at least one of the following is implemented:
- the first heat exchanger is used for cooling in the system and the second heat exchanger is used for heating in the system; and/or
- the first air channel is selectively arranged for transporting the outside air or the re-circulated cabin air in the system; and/or
- the first sub-channel of the first air channel is closed; and/or
- the second sub-channel of the first air channel is arranged for transporting air via the upper portion of the first heat exchanger to the second heat exchanger for distributing at the cabin side of the vehicle, wherein transport of the air towards the rejection port is prevented; and/or
- the second air channel is arranged for transporting the outside air in the system; and/or
- the second air channel is arranged for passing the air, transported via the second air channel, to the first heat exchanger, wherein after passing the first heat exchanger, the air is rejected to the outside environment of the vehicle via the air rejection port; and/or
- the bypass channel is selectively closed or at least partially opened depending on the temperature requested for the cabin side of the vehicle.

8. The system according to claim 5, wherein in the cabin reheat and heat recovery mode at least one of the following is implemented:
- the first heat exchanger is used for cooling in the system and the second heat exchanger is used for heating in the system; and/or
- the first air channel is arranged for transporting the outside air in the system; and/or
- the first sub-channel of the first air channel is closed; and/or
- the second sub-channel of the first air channel is arranged for transporting air via the upper portion of the first heat exchanger to the second heat exchanger for distributing at the cabin side of the vehicle, wherein transport of the air towards the rejection port is prevented; and/or
- the second air channel is selectively arranged for transporting the re-circulated cabin air or the outside air in the system; and/or
- the second air channel is arranged for passing the air, transported via the second air channel, to the first heat exchanger, wherein after passing the first heat exchanger, the air is rejected to the outside environment of the vehicle via the air rejection port; and/or
- the bypass channel is selectively closed or at least partially opened depending on the temperature requested for the cabin side of the vehicle.

9. The system according to claim 5, wherein in the cabin cooling mode at least one of the following is implemented:
- the first heat exchanger is used for heating in the system and the second heat exchanger is used for cooling in the system;
- the first air channel is selectively arranged for transporting the outside air or the re-circulated cabin air in the system; and/or
- the first sub-channel of the first air channel is arranged for transporting air by bypassing the first heat exchanger and the second sub-channel of the first air channel is arranged for transporting air via the upper portion of the first heat exchanger; and/or
- the first sub-channel of the first air channel is arranged, upon transporting air by bypassing the first heat exchanger, for transporting the air to the second heat exchanger for cooling and distributing at the cabin side of the vehicle; and/or
- the second sub-channel of the first air channel is arranged for transporting air via the upper portion of the first heat exchanger towards the rejection port; and/or
- the second air channel is arranged for transporting the outside air in the system; and/or
- the second air channel is arranged for passing the air, transported via the second air channel, to the first heat exchanger, wherein after passing the first heat exchanger, the air is rejected to the outside environment of the vehicle via the air rejection port; and/or
- the bypass channel is selectively closed or at least partially opened depending on the temperature requested for the cabin side of the vehicle.

10. A vehicle comprising a heating, ventilation, and air conditioning, HVAC, system according to any one of the preceding claims.

11. A use of a heating, ventilation, and air conditioning, HVAC, system according to any one of the preceding claims 1 to 9 for regulating climate and/or temperature in a cabin of a vehicle.
